# EUROPEAN PATENT APPLICATION

(11) **EP 2 884 481 A1**
(43) Date of publication of application: **17.06.2015**
(21) Application number: 14162128.4
(22) Date of filing: 27.03.2014
(51) Int. Cl.: G09F 3/20, G09G 3/04

(54) **System for electronic shelf label, gateway, electronic shelf label and method of operating system for electronic shelf label**

(30) Priority: 12.12.2013 KR 20130154682
(71) Applicant: Samsung Electro-Mechanics Co., Ltd., Suwon-si, Gyeonggi-do 443-743 (KR)
(72) Inventor: Park,, Jung Hwan, 443-743 Gyeonggi-Do (KR); Ho,, Hee Seok, 443-743 Gyeonggi-Do (KR); Seo,, Jeong Su, 443-743 Gyeonggi-Do (KR); Lee,, Song On, 443-743 Gyeonggi-Do (KR)
(74) Representative: Potter Clarkson LLP

(57) **Abstract**

The present invention relates to a system for an electronic shelf label, a gateway, an electronic shelf label, and a method of operating a system for an electronic shelf label including: a segment display unit consisting of segments; and a driver operated according to driving pattern data and individually turning on or off the respective segments, wherein the driving pattern data may be formed by arranging one value selected from a first value for turning on the segment and a second value for turning off the segment as many as the number of the segments and included in a signal transmitted to the electronic shelf label from the gateway.

## Description

### CROSS-REFERENCE TO RELATED APPLICATIONS

Claim and incorporate by reference domestic priority application and foreign priority application as follows:

### "CROSS REFERENCE TO RELATED APPLICATION

This application claims the foreign priority benefit of Korean Patent Application Serial No. 10-2013-0154682, entitled filed December 12, 2013, which is hereby incorporated by reference in its entirety into this application."

### BACKGROUND OF THE INVENTION

### 1. Field of the Invention

The present invention relates to a system for an electronic shelf label, a gateway, an electronic shelf label, and a method of operating a system for an electronic shelf label.

### 2. Description of the Related Art

Labels, which display product information and price, are used to display and sell a significant number of products in certain areas such as retail stores.

In general, price labels are attached near the corresponding products on display by directly writing product information necessary for sale, for example, price and discount information on paper by hand or printing the product information on paper according to the standardized format.

The conventional method as above seems to be simple and convenient and implemented at low cost, but the existing paper label application method has limitations in the areas, such as large retail stores, in which the standardized formats are used for tens of thousands of product items and product fluctuation occurs at any time.

That is, when the price fluctuation of some of the numerous product items occurs, it is needed to correct and change the labels in the location of the corresponding products displayed in the retail stores after picking out the corresponding labels and manually writing or printing the product information such as the changed prices.

Therefore, whenever the price information of the products is changed, the time and workforce for the correction and change are needed and the need for improvement of this is on the rise due to the properties of the large retail stores.

That is, there is a need to develop a means for changing product information rapidly, accurately, and simply at minimum costs.

In recent times, in order to satisfy the needs of the market, there are attempts to replace the existing paper label with an electronic tag using an electronic device, and related technologies are disclosed in many documents such as Patent Document 1 and Patent Document 2.

According to the language/cultural differences of organizations and countries in which the related technologies have been developed, various terms such as an electronic shelf label (ESL), an electronic price label (EPL), and an electronic information label (EIL) are used, but it is due to the cultural/language differences in recognizing and describing the label and the electronic tag and thus there are not much difference in the purpose and use thereof.

Hereinafter, in the present invention, it will be referred to as "electronic tag" in Korean and "ESL" in English.

In general, a server and a gateway are connected through a wired communication network, and the gateway and an ESL are connected through a wireless communication network.

Further, even though there are some differences depending on where a system for an ESL is installed, the system for an ESL may include hundreds to tens of thousands of ESLs. And the ESLs are mainly supplied with power by a battery, but there are limits to the capacity of the battery due to the size of the battery compared to the size of the ESL. Therefore, it is needed to minimize battery consumption of the ESL and reduce manufacturing costs in order to reduce maintenance costs of the system for an ESL.

Further, the format of the content displayed by the ESL may be changed according to the request of an operator of the system for an ESL or a manager of the store where the system for an ESL is installed. In this case, in the past, there was no choice but to upgrade firmware of each ESL through a wireless communication network or replace each of tens of thousands of the ESLs with a new ESL.

However, it takes a considerable time to upgrade the firmware of the ESL through a wireless communication network and it is difficult to mount high-end hardware to the relatively inexpensive ESL. Therefore, it is not easy to ensure that the ESL consisting of low-cost and low-end hardware processes large data correctly. Thus, reliability is low.

Further, enormous costs are consumed when the ESLs are replaced with new ESLs according to the changes in the format of the content displayed by the ESLs.

### [Related Art Document]

### [Patent Document]

Patent Document 1: U.S. Patent Publication No. 2010-0205000
Patent Document 2: U.S. Patent Publication No. 2010-0106588

### SUMMARY OF THE INVENTION

The present invention has been invented in order to overcome the above-described problems and it is, therefore, an object of the present invention to provide a system for an electronic shelf label (ESL), a gateway, an ESL, and a method of operating a system for an ESL that can reduce power consumption and manufacturing costs of an ESL.

It is another object of the present invention to provide a system for an ESL, a gateway, an ESL, and a method of operating a system for an ESL that can efficiently and reliably change the format of content displayed by an ESL.

In accordance with one aspect of the present invention to achieve the object, there is provided a system for an ESL including a server, a gateway, and ESLs, wherein each of the ESLs may include a segment display unit consisting of segments; and a driver operated according to driving pattern data and individually turning on or off the respective segments, wherein the driving pattern data may be formed by arranging one value selected from a first value for turning on the segment and a second value for turning off the segment as many as the number of the segments and included in a signal transmitted to the ESL from the gateway.

At this time, the server may transmit display content data, which defines a display content to be displayed on each of the ESLs, to the gateway, and the gateway may generate the driving pattern data by converting the display content data according to a pin map.

Further, the respective segment display units provided in at least two ESLs of the ESLs may have different arrangement types of the segments, and the pin map may be determined according to the arrangement types of the segments.

Further, the gateway may select the pin map by identifying the segment arrangement type of each of the ESLs and generate the driving pattern data using the selected pin map.

Further, the ESLs may include a first ESL having a segment display unit consisting of segments arranged in a first arrangement type; and a second ESL having a segment display unit consisting of segments arranged in a second arrangement type different from the first arrangement type, and the gateway may include a first pin map corresponding to the first arrangement type and a second pin map corresponding to the second arrangement type.

Further, the gateway may include an identification unit for identifying the arrangement types of the ESLs; and a driving pattern generation unit for generating a driving pattern by selecting one of the first pin map and the second pin map according to the arrangement type identified by the identification unit.

In accordance with another aspect of the present invention to achieve the object, there is provided a gateway that transmits a signal to an ESL having a segment display unit consisting of segments, including: a first communication unit connected to a server by a wired or wireless communication network and receiving display content data, which defines a display content to be displayed on each of the ESLs, from the server; a second communication unit connected to the ESL by a wireless communication network; a driving pattern generation unit for generating driving pattern data by converting the display content data according to a pin map; and a control unit for controlling the first communication unit, the second communication unit, and the driving pattern generation unit, wherein the pin map may be determined according to an arrangement type of the segments, and the driving pattern data may be formed by arranging one value selected from a first value for turning on the segment and a second value for turning off the segment as many as the number of the segments.

In accordance with another aspect of the present invention to achieve the object, there is provided a gateway that transmits a signal to an ESL having a segment display unit consisting of segments, including: a first communication unit connected to a server by a wired or wireless communication network and receiving display content data, which defines a display content to be displayed on each of the ESLs, from the server; a second communication unit connected to the ESL by a wireless communication network; a control unit including a driving pattern generation unit for generating driving pattern data by converting the display content data according to a pin map and controlling the first communication unit and the second communication unit; and a memory unit for storing the driving pattern data, wherein the pin map may be determined according to an arrangement type of the segments, and the driving pattern data may be formed by arranging one value selected from a first value for turning on the segment and a second value for turning off the segment as many as the number of the segments.

At this time, the pin map may include a first pin map corresponding to a first arrangement type and a second pin map corresponding to a second arrangement type, and the control unit may include an identification unit for identifying the arrangement type of the segments of the ESL to receive the driving pattern data.

Further, the gateway may further include a memory unit for storing the display content data received from the first communication unit.

In accordance with another aspect of the present invention to achieve the object, there is provided an ESL including: a segment display unit consisting of segments; a communication module for receiving driving pattern data formed by arranging one value selected from a first value for turning on the segment and a second value for turning off the segment as many as the number of the segments; and a driver operated according to the driving pattern data and individually turning on or off the respective segments.

At this time, the driving pattern data may be generated by converting display content data, which defines a display content to be displayed on each of the ESLs according to a pin map, and the pin map may be determined according to an arrangement type of the segments.

In accordance with another aspect of the present invention to achieve the object, there is provided a method of operating a system for an ESL including a server, ESLs having a segment display unit consisting of segments, and a gateway, including: generating driving pattern data by converting display content data according to a pin map by the gateway; and individually turning on or off the respective segments by receiving the driving pattern data by one of the ESLs, wherein the display content data may define a display content to be displayed on each of the ESLs, the driving pattern data may be formed by arranging one value selected from a first value for turning on the segment and a second value for turning off the segment as many as the number of the segments, and the pin map may be determined according to an arrangement type of the segments.

At this time, the display content data may be transmitted to the gateway from the server and stored in the gateway.

Further, the method of operating a system for an ESL may further include selecting the pin map by identifying the segment arrangement type of each of the ESLs.

Further, when one of the ESLs transmits a data transmission request, the gateway may identify the segment arrangement type by checking an identification number of the ESL included in the data transmission request.

Meanwhile, the display content data may be transmitted to the gateway from the server in a state of being coupled with the identification number of the ESL where the display content data is to be displayed, and the gateway may select the pin map by checking the identification number of the ESL where the display content data received from the server is to be displayed and store the driving pattern data by converting the display content data into the driving pattern data according to the selected pin map.

At this time, when one of the ESLs transmits the data transmission request, the gateway may extract the stored driving pattern data to transmit the extracted data to the ESL from which the data transmission request is transmitted.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a block diagram schematically showing a system for an ESL in accordance with an embodiment of the present invention;
FIG. 2 is a block diagram schematically showing a gateway in accordance with an embodiment of the present invention;
FIG. 3 is a block diagram schematically showing a gateway in accordance with another embodiment of the present invention;
FIG. 4 is a block diagram schematically showing an ESL in accordance with an embodiment of the present invention;
FIG. 5 is a view schematically showing a segment display unit and a principle of operation thereof in accordance with an embodiment of the present invention;
FIG. 6 is a view schematically showing a segment display unit and a principle of operation thereof in accordance with an embodiment of the present invention;
FIG. 7 is a view schematically showing a connection relationship between a segment display unit and a driver in accordance with an embodiment of the present invention;
FIG. 8 is a view schematically showing a method of operating a system for an ESL in accordance with an embodiment of the present invention; and
FIG. 9 is a view schematically showing a method of operating a system for an ESL in accordance with an embodiment of the present invention.

### DETAILED DESCRIPTION OF THE PREFERABLE EMBODIMENTS

Advantages and features of the present invention and methods of accomplishing the same will be apparent by referring to embodiments described below in detail in connection with the accompanying drawings. However, the present invention is not limited to the embodiments disclosed below and may be implemented in various different forms. The embodiments are provided only for completing the disclosure of the present invention and for fully representing the scope of the present invention to those skilled in the art. Like reference numerals refer to like elements throughout the specification.

Terms used herein are provided to explain embodiments, not limiting the present invention. Throughout this specification, the singular form includes the plural form unless the context clearly indicates otherwise. When terms "comprises" and/or "comprising" used herein do not preclude existence and addition of another component, step, operation and/or device, in addition to the above-mentioned component, step, operation and/or device.

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical or non-electrical manner. Objects described herein as being "adjacent to" each other may be in physical contact with each other, in close proximity to each other, or in the same general region or area as each other, as appropriate for the context in which the phrase is used. Occurrences of the phrase "in one embodiment" herein do not necessarily all refer to the same embodiment.

Hereinafter, configurations and operational effects of the present invention will be described in detail with reference to the accompanying drawings.

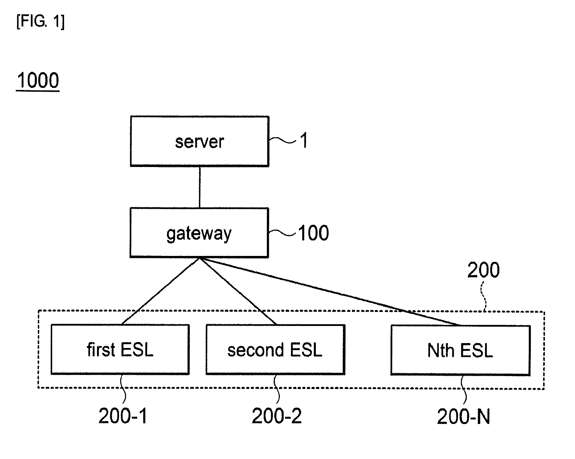

FIG. 1 is a block diagram schematically showing a system 1000 for an electronic shelf label (ESL) in accordance with an embodiment of the present invention.

Referring to FIG. 1, the system 1000 for an ESL according to an embodiment of the present invention may include a server 1, a gateway 100, and an ESL 200.

Further, although not shown, a separate input means or management terminal, which is connected to the server 1, may be further provided when necessary.

The server 100 may perform a function of receiving an update command to allow the ESL 200 to display predetermined information.

At this time, as an example, the update command may be a command to display a price of a product A as $20.00.

This update command may be transmitted to the server 1 from a separate legacy system (not shown) through a wired or wireless communication network.

Further, the update command may be input to the server 1 by a manager who inputs predetermined update information through the input means directly connected to the server 1. At this time, the input means may be a PC or a POS terminal which is locally connected to the server 1.

Next, the gateway 100 may be connected to the server 1 through a wired or wireless communication network. And the gateway 100 may be connected to the ESLs 200 through a wireless communication network.

Accordingly, when the server 1, which receives the update command, transmits display content data to allow the ESLs 200 to display the predetermined information, the gateway 100 can wirelessly transmit the data to the ESLs 200. Here, the display content data means data which defines display content displayed on each of the ESLs 200. Hereinafter, all of the display content data has the same meaning.

Meanwhile, the ESLs 200 may be classified into a segment type and a dot-matrix type according to the display method.

First, the segment type means a method of displaying numbers, characters, special symbols, etc. by turning on or off predetermined segments on a panel where a plurality of segments are arranged and may be referred to as a passive method.

Further, the dot-matrix type means a method of turning on or off dots corresponding to specific coordinates by dividing a dot-matrix, which consists of a plurality of dots forming a lattice pattern, into XY coordinates and may be referred to as an active method.

Here, the ESL 200 may have a driver 230 for selectively turning on or off some of the segments. And this driver 230 may be operated according to driving pattern data. In an embodiment, the driving pattern data may mean data formed by arranging one value selected from a first value for turning on the segment and a second value for turning off the segment as many as the number of the segments. For example, when the driving pattern data consists of "1101010", the driver 230, which receives this driving pattern data, may be driven to turn on the segments 1, 2, 4 and 6 and turn off the remaining segments. Further, the driving pattern data may turn on or off the segments to display the above-described display content data and be generated by converting the display content data according to a predetermined rule.

And the system 1000 for an ESL according to an embodiment of the present invention may generate the driving pattern data in the gateway 100. That is, the gateway 100 may generate the driving pattern data by receiving the display content data from the server 1 and converting the received data. And the driving pattern data generated like this may be transmitted to the ESL 200, and the ESL 200 may provide the received driving pattern data to the driver 230 and turn on or off the predetermined segments among the segments to display the display content data.

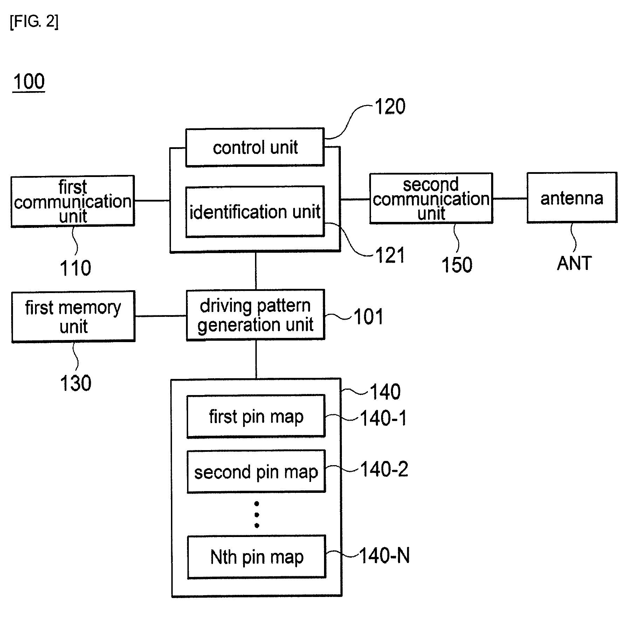

FIG. 2 is a block diagram schematically showing the gateway 100 in accordance with an embodiment of the present invention.

Referring to FIG. 2, the gateway 100 according to an embodiment of the present invention may include communication units 110 and 150 and a control unit 120 and perform a function of generating the driving pattern data and transmitting the driving pattern data to the ESL 200. Further, in an embodiment, the gateway 100 may further include a driving pattern generation unit 101, an identification unit 121, a first memory unit 130, a pin map 140, an antenna ANT, etc.

First, the communication unit may perform a function of allowing the gateway 100 to transceive data with the server 1 and the ESLs 200.

A first communication unit 110 may be connected to the server 1. The first communication unit 110 may be typically connected to the server 1 through a wired communication network or may be connected to the server 1 through a wireless communication network when necessary.

And a second communication unit 150 may be connected to the ESL 200. It is common that the second communication unit 150 is connected to the ESL 200 through a wireless communication network. Here, the wireless communication network may be implemented as various wireless communication standards such as Zigbee, WiFi, and cellular. Further, the antenna ANT may be connected to the second communication unit 150 to increase coverage of a wireless signal or improve a transmission or receiving sensitivity of the wireless signal.

Although the first communication unit 110 and the second communication unit 150 are separately described to help understanding, it is apparent that the first communication unit 110 and the second communication unit 150 can be implemented together as one communication chip.

Next, the control unit 120 may be connected to at least some of the various components provided in the gateway 100, such as the first communication unit 110 and the second communication unit 150, to control operations thereof and implemented as a typical micro control unit (MCU) etc.

Next, the gateway 100 according to an embodiment of the present invention may include the driving pattern generation unit 101. As described above, the driving pattern generation unit 101 may perform a function of generating the driving pattern data. And the driving pattern data may be generated by converting the display content data. Here, the pin map 140 may be needed to convert the display content data into the driving pattern data. This pin map 140 also may be provided in the gateway 100.

The pin map 140 may be changed according to the arrangement type of the segments. And at least some of the ESLs 200 connected to one gateway 100 may have the different segment arrangement types. When the arrangement types of the segments are different like this, it may be needed to apply the different pin maps 140 to convert the display content data into the driving pattern data. Therefore, the gateway 100 may have the pin maps 140 of various configurations. These various pin maps 140 are shown as a first pin map 140 and a second to Nth pin maps 140 in FIG. 2.

Meanwhile, the appropriate pin map 140 should be used when the driving pattern generation unit 101 converts the display content data into the driving pattern data. That is, in order to display the display information, which is defined by the display content data, using the specific driving pattern data, the display content data should be converted using the pin map 140 corresponding to the arrangement type of the segments provided in the specific ESL 200. For this, the gateway 100 according to an embodiment of the present invention may have the identification unit 121. At this time, the identification unit 121 may perform a function of identifying the arrangement type of the segments and be included in the above-described control unit 120.

Accordingly, the gateway 100 can identify how the segments are arranged in the ESL 200 where the display content data should be displayed and select the pin map 140 corresponding to the identified segment arrangement type to generate the driving pattern data by the driving pattern generation unit 101.

In an embodiment, the display content data may be stored in a first memory 250 after being received through the first communication unit 110. And when a data transmission request of the ESL 200 is received through the second communication unit 150, the control unit 120 or the identification unit 121 may identify the arrangement type of the segments by checking an identification number of the ESL 200 which transmits the received data transmission request. And the control unit 120 or the identification unit 121 may inform the driving pattern generation unit 101 of the arrangement type of the segments or information about the corresponding pin map 140, and the driving pattern generation unit 101 may generate the driving pattern data by selecting the appropriate pin map 140 to convert the display pattern data stored in the first memory 250.

The driving pattern data generated like this may be transmitted to the ESL 200 through the second communication unit 150.

In an embodiment, the display content data may be coupled with the identification number of the ESL 200 which should display the display content data. And when the display content data is received through the first communication unit 110, the control unit 120 or the identification unit 121 may identify the segment arrangement type using the identification number of the ESL 200 coupled with the display content data. And when the identified information is transmitted to the driving pattern generation unit 101, the driving pattern generation unit 101 may generate the driving pattern data by selecting the appropriate pin map 140 to convert the display content data. The driving pattern data generated like this may be stored in a separate storage means. In an embodiment, the storage means may be implemented as the first memory unit 130.

Meanwhile, the driving pattern data stored like this may be extracted from the first memory unit 130 and transmitted to the ESL 200 according to the data transmission request of the ESL 200 intended to receive the driving pattern data.

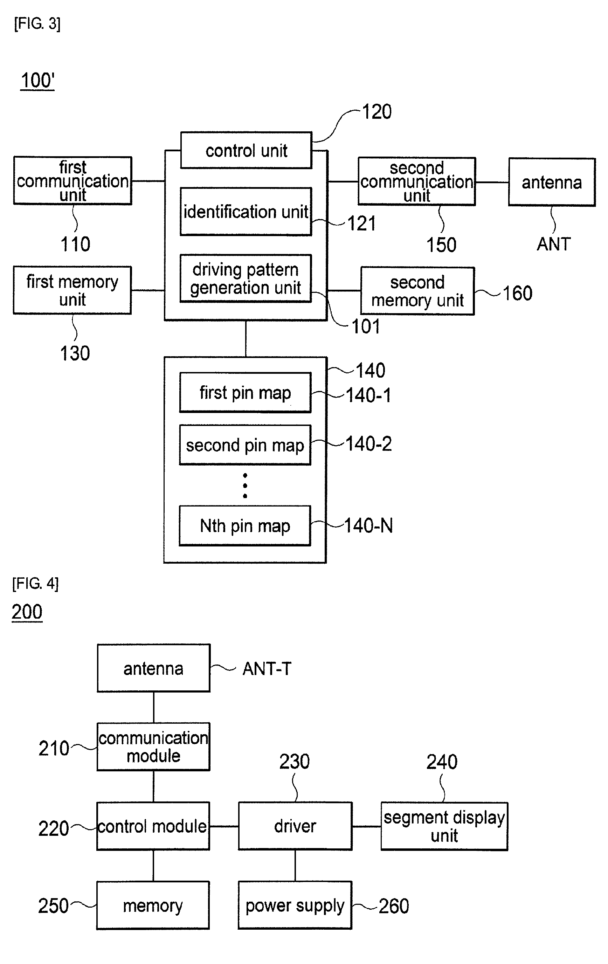

FIG. 3 is a block diagram schematically showing a gateway 100 in accordance with another embodiment of the present invention.

Referring to FIG. 3, it can be understood that a driving pattern generation unit 101 can be included in a control unit 120. That is, the driving pattern generation unit 101 as well as an identification unit 121 can be mounted to an MCU which constitutes the control unit 120.

And, as shown, a second memory unit 160 may be further included with a first memory unit 130 to store the display content data in the first memory unit 130 and the driving pattern data in the second memory unit 160.

Besides, a configuration and a principle of operation of the gateway 100 according to the embodiment shown in FIG. 3 are almost the same as those described above. Thus, repeated descriptions thereof will be omitted.

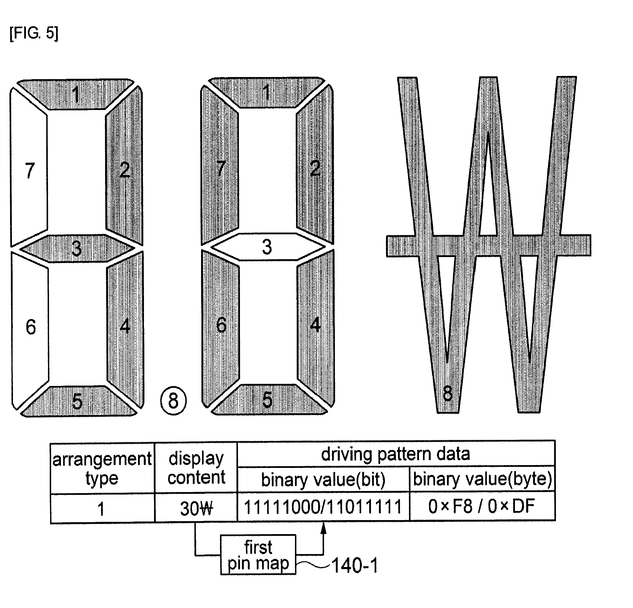

FIG. 4 is a block diagram schematically showing the ESL 200 in accordance with an embodiment of the present invention, and FIGS. 5 to 7 are views schematically showing a segment display unit 240 and a principle of operation thereof in accordance with an embodiment of the present invention.

Referring to FIGS. 4 to 7, the ESL 200 according to an embodiment of the present invention may include a communication module 210, a driver 230, and a segment display unit 240.

First, the communication module 210 may perform a function of transmitting a wireless signal through a wireless communication network from the gateway 100, and the antenna ANT may be connected to the communication module 210.

Next, the segment display unit 240 may consist of a plurality of segments. One or more of the segments may be turned on or off by the driver 230 to display the information according to the display content data.

At this time, the ESL 200 according to an embodiment of the present invention may receive the driving pattern data from the gateway 100 through the communication module 210, and the driving pattern data may be transmitted to the driver 230 to perform a display operation of the segment display unit 240.

Meanwhile, in an embodiment, the ESL 200 may further include a control module 220, a memory 250, a power supply 260, etc.

The memory 250 may store received data or data to be transmitted and other required data, and the memory 250 may be implemented as a typical volatile or non-volatile storage device.

Like the typical ESLs 200, the power supply 260 may be implemented as a battery such as a coin battery.

The control module 220 may be connected to the communication module 210, the driver 230, the memory 250, the power supply 260, etc. to perform a function of controlling operations of the respective components. And the control module 220 may be implemented as a typical MCU.

Meanwhile, while several or several tens of the gateways 100 may be connected to one server 1, tens or thousands of the ESLs 200 may be connected to one gateway 100.

And the ESLs 200 connected to one gateway 100 may have various types of display means when necessary. Here, the display means may be implemented in various types such as a segment type, a dot-matrix type, and a graphic type. Especially, the case in which the display means of the ESL 200 is the segment type segment display unit 240 is shown in FIGS. 5 to 7.

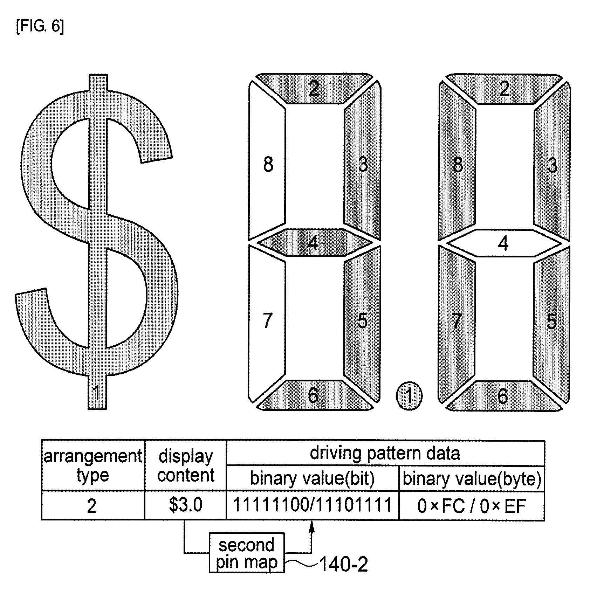

Referring to the drawing, the segment display unit 240 having the segments arranged as shown in FIG. 5 may display from 0.0 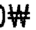 to 99, and the segment display unit 240 having the segments arranged as shown in FIG. 6 may display from $0.0 to $99. Of course, the sign $ or W may be selectively displayed when necessary.

Continuously referring to the drawing, when the segment arrangement type of the segment display unit 240 is as shown in FIG. 5, if the driving pattern data "11111000/11011111" is received in the communication module 210 and then transmitted to the driver 230, "30 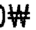 " may be displayed.

That is, in the system 1000 for an ESL according to an embodiment of the present invention, if it is intended to display "30on the ESL 200 including the segment display unit 240 having the segments arranged as shown in FIG. 5, the server 1 may transmit the display content data, which means "30 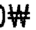 ", to the gateway 100. And the gateway 100 may convert the display content data, which means "30 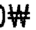 ", into the driving pattern data "11111000/11011111" and transmit the driving pattern data to the ESL 200, and the ESL 200 may display "30 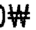 " by receiving the driving pattern data.

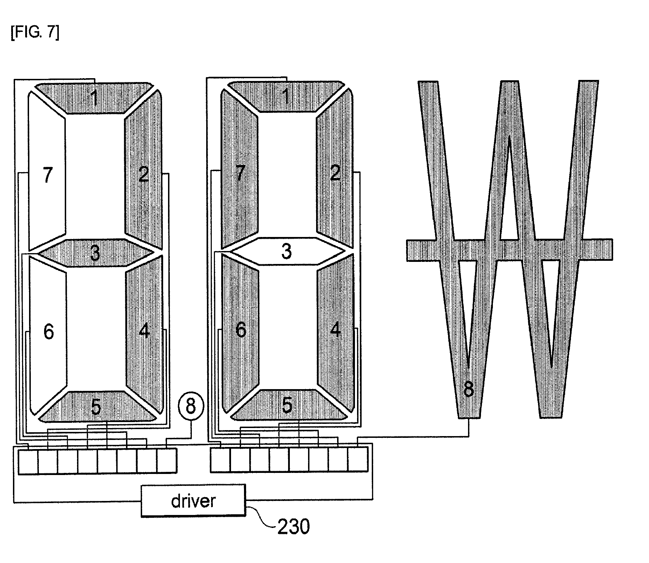

Here, the driving pattern data may consist of binary values (bit values). In this case, "1" may be a value that turns on the segment, and "0" may be a value that turns off the segment. Especially, referring to FIG. 7, the segments 1 to 7 may form one group to form the segment display unit 240 (so-called seven segments) that can display 0 to 9, and the segment 8 may form a dot that represents a decimal point. The transmitted data is typically grouped in the unit of bytes. Since 1 byte consists of 8 bits, when the eight segments form one display unit like this, it is possible to define all cases that one display unit can represent by 1 byte of data.

And another seven segments and the won sign " 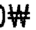 " provided behind the dot also form one display unit to define the information to be displayed by 1 byte of the driving pattern data.

Like this, it is possible to represent from 0.0 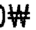 to 99 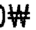 only by two bytes of the driving pattern data.

Meanwhile, it can be understood that the respective segment display units 240 shown in FIGS. 5 and 6 have the different segment arrangement types. That is, in at least two of the ESLs 200 included in the system 1000 for an ESL according to an embodiment of the present invention, the arrangement types of the segments included in the respective ESLs 200 may be different from each other.

Here, the segment arrangement type shown in FIG. 5 may be referred to as a first type, and the segment arrangement type shown in FIG. 6 may be referred to as a second type. And it is described above that the pin map 140 is changed according to the segment arrangement type, and the pin map 140 corresponding to the first type may be referred to as a first pin map 140, and the pin map corresponding to the second type may be referred to as a second pin map 140.

Therefore, the display content data which defines the information to be displayed on the ESL 200 having the first type segment display unit 240 may be converted by the first pin map 140 to be generated as the driving pattern data, and the display content data which defines the information to be displayed on the ESL 200 having the second type segment display unit 240 may be converted by the second pin map 140 to be generated as the driving pattern data.

Meanwhile, the driving pattern data may be transmitted as a hex value that is represented by "0xF8" etc.

While several or several tens of the gateways 100 are connected to one server 1, tens or thousands of the ESLs 200 may be connected to one gateway 100. That is, when the system 1000 for an ESL is implemented in large retail stores etc., an exceptionally large number of the ESLs 200 are needed compared to the number of the servers 1 or the gateways 100.

Therefore, it is needed to reduce a unit cost of the ESL 200 to reduce construction and maintenance costs of the entire system 1000 for an ESL.

The ESL 200 provided in the system 1000 for an ESL according to an embodiment of the present invention can allow the segment display unit 240 to display the desired information by simple operation that the communication module 210 receives the driving pattern data and transmits the received data to the driver 230. Thus, the ESL 200 can be implemented with low-end devices.

Further, even when it is needed to change the format of the content to be displayed by the ESLs 200, it is possible to complete a necessary change procedure only by providing the pin map 140 corresponding to the changed format in the gateway 100 instead of upgrading firmware of each ESL 200 or replacing the ESL 200.

Further, even when some of the ESLs 200 are replaced with the ESLs 200 including the segment display unit 240 having the different segment arrangement type from the existing ESLs 200, it is possible to improve maintenance efficiency of the system 1000 for an ESL by a principle similar to that described above.

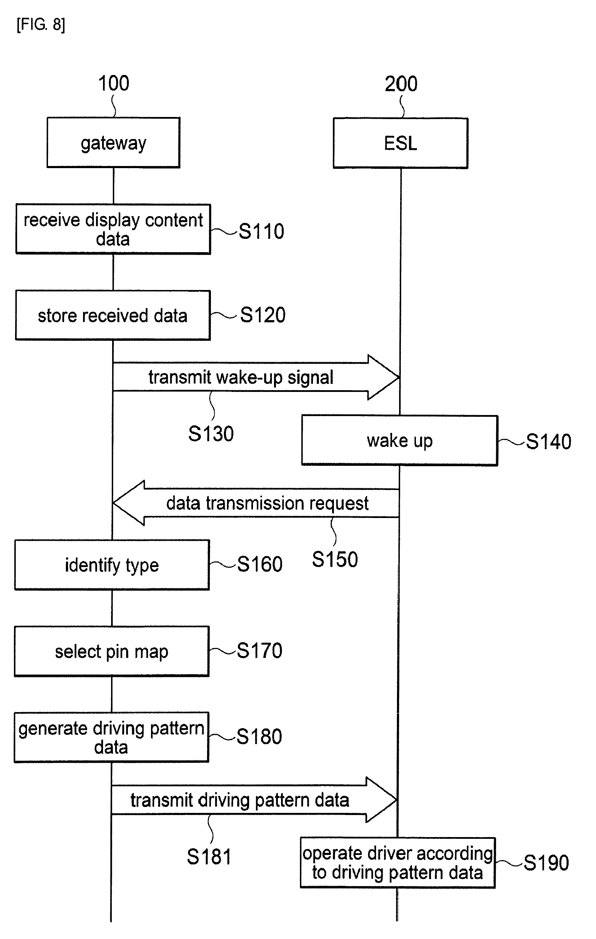

FIG. 8 is a view schematically showing a method of operating a system 1000 for an ESL in accordance with an embodiment of the present invention.

Referring to FIGS. 1 to 8, the method of operating a system 1000 for an ESL according to an embodiment of the present invention may include the steps of generating driving pattern data by a gateway 100 and individually turning on or off segments by receiving the driving pattern data by an ESL 200.

At this time, the gateway 100 may receive display content data from a server 1 (S110), and the display content data received like this may be stored in a first memory unit 130 etc. (S120).

Meanwhile, the ESL 200 may maintain a sleep state at normal times to reduce battery consumption. Then, when transmission and reception of data are necessary, the gateway 100 may transmit a wake-up signal to the ESL 200 (S130). The ESL 200 may wake up by receiving the wake-up signal (S140), and transmit a data transmission request to the gateway 100 (S150).

An identification number of the ESL 200 may be included in the data transmission request. The gateway 100 may identify the ESL 200 using the identification number and identify a segment arrangement type of the ESL 200 at the same time (S160). The result of the identification may be transmitted to a driving pattern generation unit 101, and the driving pattern generation unit 101 may generate the driving pattern data (S180) by selecting an appropriate pin map 140 (S170). The driving pattern data generated like this may be transmitted to the ESL 200 through a second communication unit 150 and an antenna ANT (S181), and a communication module 210 of the ESL 200 may receive the driving pattern data and transmit the received data to a driver 230 to individually turn on or off specific segments, consequently displaying desired information in a segment display unit 240 (S190).

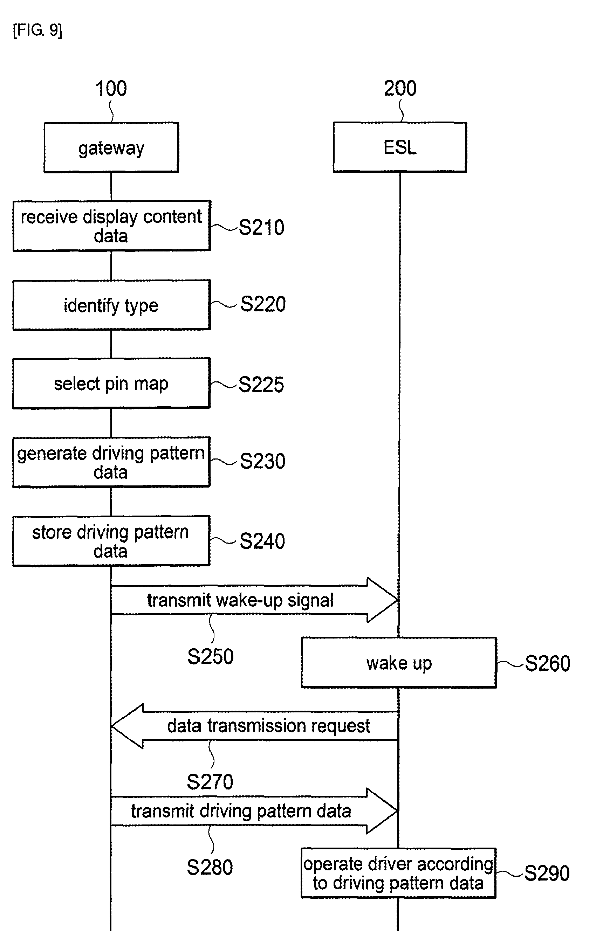

FIG. 9 is a view schematically showing a method of operating a system 1000 for an ESL in accordance with an embodiment of the present invention.

Referring to FIG. 9, the method of operating a system 1000 for an ESL according to the present embodiment is different from the above-described embodiment in that a gateway 100 may receive display content data (S210), identify a segment arrangement type of an ESL 200 where the display content data is to be displayed (S220), select a pin map 140 (S225) to generate driving pattern data (S230), and store the driving pattern data (S240).

The driving pattern data stored like this may be transmitted (S280) to the ESL 200 by being included in a reply signal to a data transmission request S270 after transmission (S250) of a wake-up signal and a wake-up (S260) of the ESL 200.

According to an embodiment of the present invention, it is possible to implement an ESL with lower-end devices than before and reduce power consumption of the ESL as well.

Further, according to an embodiment of the present invention, even when it is needed to change the format of the content to be displayed by the ESLs, it is possible to complete a necessary change procedure only by providing a pin map corresponding to the changed format in a gateway instead of upgrading firmware of each ESL or replacing the ESL.

Further, according to an embodiment of the present invention, even when some of the ESLs are replaced with the ESLs including a segment display unit having a different segment arrangement type from the existing ESLs, it is possible to improve the efficiency of maintenance operations.

## Claims

1. A system for an electronic shelf label comprising a server, a gateway, and electronic shelf labels, wherein each of the electronic shelf labels comprises:
a segment display unit consisting of segments; and
a driver operated according to driving pattern data and individually turning on or off the respective segments, wherein
the driving pattern data is formed by arranging one value selected from a first value for turning on the segment and a second value for turning off the segment as many as the number of the segments and included in a signal transmitted to the electronic shelf label from the gateway.

2. The system for an electronic shelf label according to claim 1, wherein the server transmits display content data, which defines a display content to be displayed on each of the electronic shelf labels, to the gateway, and
the gateway generates the driving pattern data by converting the display content data according to a pin map.

3. The system for an electronic shelf label according to claim 2, wherein the respective segment display units provided in at least two of the electronic shelf labels have different arrangement types of the segments, and
the pin map is determined according to the arrangement type of the segments.

4. The system for an electronic shelf label according to claim 3, wherein the gateway selects the pin map by identifying the segment arrangement type of each of the electronic shelf label and generates the driving pattern data using the selected pin map.

5. The system for an electronic shelf label according to claim 4, wherein the electronic shelf labels comprise:
a first electronic shelf label having a segment display unit consisting of segments arranged in a first arrangement type; and
a second electronic shelf label having a segment display unit consisting of segments arranged in a second arrangement type different from the first arrangement type, and
the gateway comprises a first pin map corresponding to the first arrangement type and a second pin map corresponding to the second arrangement type.

6. The system for an electronic shelf label according to claim 5, wherein the gateway comprises:
an identification unit for identifying the arrangement type of the electronic shelf labels; and
a driving pattern generation unit for generating a driving pattern by selecting one of the first pin map and the second pin map according to the arrangement type identified by the identification unit.

7. A gateway that transmits a signal to an electronic shelf label having a segment display unit consisting of segments, comprising:
a first communication unit connected to a server by a wired or wireless communication network and receiving display content data, which defines a display content to be displayed on each of the electronic shelf labels, from the server;
a second communication unit connected to the electronic shelf label by a wireless communication network;
a driving pattern generation unit for generating driving pattern data by converting the display content data according to a pin map; and
a control unit for controlling the first communication unit, the second communication unit, and the driving pattern generation unit, wherein
the pin map is determined according to an arrangement type of the segments, and
the driving pattern data is formed by arranging one value selected from a first value for turning on the segment and a second value for turning off the segment as many as the number of the segments.

8. A gateway that transmits a signal to an electronic shelf label having a segment display unit consisting of segments, comprising:
a first communication unit connected to a server by a wired or wireless communication network and receiving display content data, which defines a display content to be displayed on each of the electronic shelf labels, from the server;
a second communication unit connected to the electronic shelf label by a wireless communication network;
a control unit comprising a driving pattern generation unit for generating driving pattern data by converting the display content data according to a pin map and controlling the first communication unit and the second communication unit; and
a memory unit for storing the driving pattern data, wherein
the pin map is determined according to an arrangement type of the segments, and
the driving pattern data is formed by arranging one value selected from a first value for turning on the segment and a second value for turning off the segment as many as the number of the segments.

9. The gateway according to claim 7 or 8, wherein the pin map comprises:
a first pin map corresponding to a first arrangement type; and
a second pin map corresponding to a second arrangement type, and the control unit comprises:
an identification unit for identifying the arrangement type of the segments of the electronic shelf label to receive the driving pattern data.

10. The gateway according to claim 7, further comprising:
a memory unit for storing the display content data received from the first communication unit.

11. An electronic shelf label comprising:
a segment display unit consisting of segments;
a communication module for receiving driving pattern data formed by arranging one value selected from a first value for turning on the segment and a second value for turning off the segment as many as the number of the segments; and
a driver operated according to the driving pattern data and individually turning on or off the respective segments.

12. The electronic shelf label according to claim 11, wherein the driving pattern data is generated by converting display content data, which defines a display content to be displayed on each of the electronic shelf labels according to a pin map, and
the pin map is determined according to an arrangement type of the segments.

13. A method of operating a system for an electronic shelf label comprising a server, electronic shelf labels having a segment display unit consisting of segments, and a gateway, comprising:
generating driving pattern data by converting display content data according to a pin map by the gateway; and
individually turning on or off the respective segments by receiving the driving pattern data by one of the electronic shelf labels, wherein
the display content data defines a display content to be displayed on each of the electronic shelf labels,
the driving pattern data is formed by arranging one value selected from a first value for turning on the segment and a second value for turning off the segment as many as the number of the segments, and
the pin map is determined according to an arrangement type of the segments.

14. The method of operating a system for an electronic shelf label according to claim 13, wherein the display content data is transmitted to the gateway from the server and stored in the gateway.

15. The method of operating a system for an electronic shelf label according to claim 14, further comprising:
selecting the pin map by identifying the segment arrangement type of each of the electronic shelf labels.

16. The method of operating a system for an electronic shelf label according to claim 15, wherein when one of the electronic shelf labels transmits a data transmission request, the gateway identifies the segment arrangement type by checking an identification number of the electronic shelf label included in the data transmission request.

17. The method of operating a system for an electronic shelf label according to claim 13, wherein the display content data is transmitted to the gateway from the server in a state of being coupled with the identification number of the electronic shelf label where the display content data is to be displayed, and
the gateway selects the pin map by checking the identification number of the electronic shelf label where the display content data received from the server is to be displayed and stores the driving pattern data by converting the display content data into the driving pattern data according to the selected pin map.

18. The method of operating a system for an electronic shelf label according to claim 17, wherein when one of the electronic shelf labels transmits the data transmission request, the gateway extracts the stored driving pattern data to transmit the extracted data to the electronic shelf label from which the data transmission request is transmitted.
